Europäisches Patentamt

European Patent Office

Office européen des brevets

(11) Veröffentlichungsnummer: **0 172 320**
**A1**

(12) # EUROPÄISCHE PATENTANMELDUNG

(21) Anmeldenummer: 85105812.3

(22) Anmeldetag: 11.05.85

(51) Int. Cl.⁴: **F 16 M 13/02**

(30) Priorität: 20.08.84 DE 3430565

(43) Veröffentlichungstag der Anmeldung:
26.02.86 Patentblatt 86/9

(84) Benannte Vertragsstaaten:
AT BE CH DE FR GB IT LI LU NL SE

(71) Anmelder: MAP Mikrofilm Apparatebau Dr. Poehler
GmbH & Co. KG
Schulstrasse 2
D-6352 Ober-Mörlen(DE)

(72) Erfinder: Poehler, Hermann, Dr. rer. nat.
Taunusstrasse 11
D-6352 Ober-Mörlen(DE)

(74) Vertreter: Schlagwein, Udo, Dipl.-Ing.
Anwaltsbüro Ruppert & Schlagwein Bahnhofsallee 11
D-6350 Bad Nauheim(DE)

(54) Schwenkarm.

(57) Ein Schwenkarm (4) hat einen Ausleger (12), der um eine senkrechte Säule (5) schwenkbar ist. Diese Säule (5) ist mittels einer Auflageplatte (6) und einen Klemmarm (7) an einem Schreibtisch befestigbar. Am freien Ende des Auslegers ist um eine senkrechte Achse (21) schwenkbar eine Platte (22) befestigt, an der in Geradführungen eine als Korb ausgebildete Konsole (23) höhenverfahrbar angeordnet ist. Diese Konsole (23) dient zur Aufnahme des vom Schwenkarm (4) zu haltenden Gerätes.

Der Ausleger (12) besteht aus einem Rechteckhohlprofil (19) und einer daraus teleskopartig herausziehbaren Tragplatte (20). Die Führung der Tragplatte (20) im Rechteckhohlprofil (19) erfolgt durch Oberschienen (33 - 36), Auszugsschienen (37 - 40) und weiteren Oberschienen (41 - 44) ähnlich wie bei einer Schublade.

./...

Fig. 1

Fi

**Anwaltsbüro**
**Ruppert & Schlagwein**
Bahnhofsallee 11
D-6350 Bad Nauheim
Telefon 06032 / 3 20 78

0172320

- 1 -

MAP Mikrofilm Apparatebau
Dr. Poehler GmbH & Co KG          6352 Ober-Mörlen

Schwenkarm

Die Erfindung bezieht sich auf einen Schwenkarm zur Halterung eines am Schreibtisch zu benutzenden Gerätes, insbesondere eines Mikrofilm-Lesegerätes, welcher einen an einer senkrecht am Schreibtisch zu befestigenden Säule schwenkbar gehaltenen, teleskopartigen Ausleger hat, an dessen Ende eine Konsole zur Aufnahme des Gerätes vorgesehen ist.

Schwenkarme dieser Art sind bislang zur Halterung eines Telefons bekannt und gebräuchlich. Sie werden meist dazu eingesetzt, ein einziges Telefon derart verschwenken zu können, daß es in den jeweiligen Arbeitsbereich zweier Bearbeiter gelangt, die an zwei aneinanderstehenden Schreibtischen sitzen. Der Ausleger ist etwa 20 cm oberhalb der Scheibtischplatte um die senkrechte Säule schwenkbar gelagert, damit er beim Verschwenken nicht gegen auf dem Schreibtisch liegende Gegenstände gelangt. Um auch den Abstand der Konsole von der senkrechten Säule verändern zu können, ist der Ausleger durch zwei Rohre gebildet, die teleskopartig ausziehbar sind. Manuell lösbare Bremsen arretieren den Schwenkarm in seiner jeweiligen Stellung, damit er beim Wählen nicht ungewollt wegschwenkt.

...

In letzter Zeit stellt man zunehmend höhere Anforderungen an die ergonometrisch richtige Bemessung und Anordnung von an Arbeitsplätzen zu benutzenden Geräten. Das gilt insbesondere für Mikrofilm-Lesegeräte oder Bildschirme von Computern. Bei solchen Geräten kommt es nicht nur darauf an, daß sie einen optimalen Abstand und Winkel zu den Augen des Benutzers haben, vielmehr ist auch darauf zu achten, daß es auf dem Bildschirm nicht zu Spiegelungen kommt, durch die ein Ablesen des Bildschirms erschwert wird. Die Halterung der Geräte dieser Art muß deshalb mehr Freiheitsgrade haben als die bekannten Schwenkarme für Telefone. Zu beachten ist dabei jedoch, daß beispielsweise eine Höhenverstellung des Auslegers an der senkrechten Säule nicht in Frage kommt, weil bei einem Unterschreiten eines Abstands von 20 cm von der Schreibtischplatte damit zu rechnen ist, daß vom Ausleger beim Schwenken über den Schreibtisch dort befindliche Gegenstände weggeschoben werden.

Der Erfindung liegt die Aufgabe zugrunde, einen Schwenkarm der eingangs genannten Art derart zu gestalten, daß ein von ihm gehaltenes Gerät auch in der Höhe optimal verstellbar ist, ohne daß der Schwenkarm beim Schwenken über den Schreibtisch durch auf dem Schreibtisch befindliche Gegenstände behindert werden kann.

Diese Aufgabe wird erfindungsgemäß dadurch gelöst, daß die Konsole zumindest in etwa senkrecht zum Ausleger verschiebbar am Ende des Auslegers befestigt ist.

Durch diese Gestaltung wird erreicht, daß das von der Konsole gehaltene Gerät optimal in der Höhe verstellt werden kann, ohne daß der Ausleger seine konstruktiv festgelegte Höhe verändern muß. Deshalb gelangt der Ausleger beim Verschwenken nicht gegen auf dem Schreibtisch befindliche Gegenstände. Weiterhin behindert er nicht durch eine zu hohe Anordnung die Sicht des Bearbeiters,

...

da er sich immer unterhalb der Augenhöhe des Bearbeiters befinden kann.

Eine vorteilhafte Ausgestaltung der Erfindung besteht darin, daß die Konsole bis auf die Tischplatte senkrecht verschiebbar ist. Diese Ausführungsform ist vor allem dann vorteilhaft, wenn es sich bei dem Mikrofilm-Lesegerät um ein solches mit einer Tastatur handelt, weil diese dann auf der Schreibtischplatte aufsitzen kann, wodurch sie gut zu bedienen und nach unten abgestützt ist, so daß bei Benutzung der Tastatur der Schwenkarm nicht ins Federn kommen kann.

Konstruktiv besonders einfach ist die Höhenverstellung der Konsole zu verwirklichen, wenn am Ende des Auslegers eine zumindest in etwa senkrechte Platte mit zwei Führungsschienen angeordnet ist, über die ein zumindest in etwa senkrechter Bereich der Konsole mit zwei Oberschienen greift. Diese Ausführungsform bietet zudem den Vorteil, sehr steif zu sein, was einer Schwingungsneigung entgegen wirkt.

Die Konsole mit dem auf ihr gehaltenen Gerät bleibt in jeder Höhenlage stehen, wenn in der Platte eine Zugausgleichsbandfeder mit ihrer Aufwickelrolle gelagert und wenn das freie Ende der Zugausgleichsbandfeder durch die Platte hindurch geführt und mit der Konsole verbunden ist.

Das auf der Konsole zu haltende Gerät ist sicher gehalten und vor Stößen geschützt, wenn die Konsole als ein das zu haltende Gerät an drei Seiten zumindest teilweise umschließender Korb ausgebildet ist.

Eine andere, vorteilhafte Ausgestaltung der Erfindung besteht darin, daß die Konsole einen um eine in Seitenteilen des Korbs gelagerte Achse schwenkbaren und in beliebigen Stellungen feststellbaren Boden hat. Diese Ausführungsform ermöglicht eine stufenlose Feineinstellung des Neigungswinkels eines auf der Konsole befindlichen Gerätes.

Einen großen Schwenkwinkel kann man erreichen, wenn die Achse des Bodens vor der senkrechten Schwerpunktlinie des mit dem zu haltenden Gerätes belasteten Bodens liegt und an der Rückseite des Bodens eine Zugausgleichsfeder vorgesehen ist.

Da das von dem erfindungsgemäßen Schwenkarm zu halternde Gerät ein erhebliches Gewicht haben kann, ist es erforderlich, daß die Säule möglichst fest mit dem Schreibtisch verbunden ist. Es hat sich gezeigt, daß die bisher bekannte Befestigung solcher Säulen am überstehenden Rand einer Schreibtischplatte oftmals nicht fest genug ist, um dem Kippmoment auf Grund des Gerätegewichtes zu widerstehen. Eine ausreichende Festigkeit ist jedoch zu erreichen, wenn die senkrechte Säule eine fest mit ihr verbundene oder verbindbare, von oben her auf eine Schreibtischplatte aufsetzbare Auflageplatte und einen auf der Säule verschiebbaren Klemmarm hat und daß die Säule im montierten Zustand bis unter den Schreibtischkorpus reicht. Der Säule steht dann ein Hebelarm von über einem halben Meter Länge zur Verfügung, um das Gewichtsmoment in den Schreibtisch einleiten zu können.

Das Befestigen der Klemmsäule an einem Schreibtisch ist besonders bequem und rasch durchzuführen, wenn der Klemmarm aus zwei verschieblichen Klemmplatten besteht, wobei eine Klemmplatte nahe ihres der Säule abgewandten Endes in einem durchgehenden Gewindeloch eine gegen die andere Klemmplatte andrückbare Spannschraube hat.

...

0172320

Die im Ausleger wirkenden Biege- und Torsionskräfte werden besonders gut aufgenommen, wenn der Ausleger im Querschnitt die Form eines mit seiner Schmalseite nach unten weisenden Rechtecks hat. Ein Schwenkarm mit einem solchen Ausleger neigt ganz besonders wenig zum Schwingen, was bei automatisch gesteuerten Mikrofilm-Lesegeräten wichtig ist, weil dort durch die raschen Filmbühnenbewegungen beträchtliche Beschleunigungskräfte wirken.

Konstruktiv zweckmäßig ist es, wenn der Ausleger aus einem Rechteckhohlprofil und einer aus ihr herausziehbaren Tragplatte rechteckigen Querschnitts besteht.

Günstig ist es auch, wenn beiderseits der Tragplatte jeweils zwei Oberschienen befestigt sind, die über jeweils eine Auszugschiene greifen, welche ihrerseits in Oberschienen an den Innenflächen des Rechteckhohlprofils befestigt sind. Auf diese Weise entsteht eine Teleskopführung, die relativ kostengünstig herstellbar ist und eine sehr hohe Festigkeit hat, ohne daß der Ausleger so großflächig wird, daß die Sicht des Bearbeiters unerwünscht behindert.

Die Neigung der Konsole kann in mehreren diskreten Stellungen voreingestellt werden, wenn die Konsole mittels eines mehrere Löcher hintereinander aufweisenden Haltebleches von oben her in die Achse am Ende der Halteplatte in eine leicht nach vorn gekippte Stellung derart eingehangen ist, daß die Achse durch ein beliebiges der Löcher im Halteblech ragt.

. . .

- 6 -

Die Schwenkbewegung der Konsole um ihre in etwa senkrechte Achse am freien Ende des Auslegers kann hinsichtlich ihrer Schwergängigkeit verändert werden, wenn auf der Achse oberhalb des Haltebleches eine Druckfeder sitzt, deren Spannkraft durch eine auf der Achse aufgeschraubte Mutter verstellbar ist.

Die Konsole ist besonders bequem in die jeweilige Gebrauchslage zu bewegen, wenn an der Vorderseite der Konsole und an beiden Seitenteilen jeweils eine Griffleiste vorgesehen ist.

Eine weitere, vorteilhafte Ausgestaltung der Erfindung besteht darin, daß auf den Griffleisten ein Bremslösehebel zur Freigabe der Beweglichkeit des Schwenkarms vorgesehen ist. Durch diese Maßnahmen kann man erreichen, daß mit dem Loslassen der Griffleisten und damit auch der Bremslösehebel Bremsen betätigt werden, durch die die Beweglichkeit des Schwenkarms aufgehoben wird, so daß er sich in Ruhestellung nicht unbeabsichtigt bewegen kann.

Da das auf der Konsole zu haltende Gerät meist eine Spannungsversorgung benötigt, ist es vorteilhaft, wenn durch die senkrechte Säule und den Ausleger ein elektrisches Kabel bis zur Konsole geführt ist. Die Spannungszuführung stört dann nicht auf dem Schreibtisch.

Die Erfindung läßt zahlreiche Ausführungsformen zu. Zur Verdeutlichung ihres Grundprinzips ist eine davon in der Zeichnung dargestellt und wird nachfolgend beschrieben. In der Zeichnung zeigen

Fig. 1    eine Ansicht von der Seite auf einen
          Schreibtisch, an dem der erfindungsgemäße
          Schwenkarm angebracht ist,

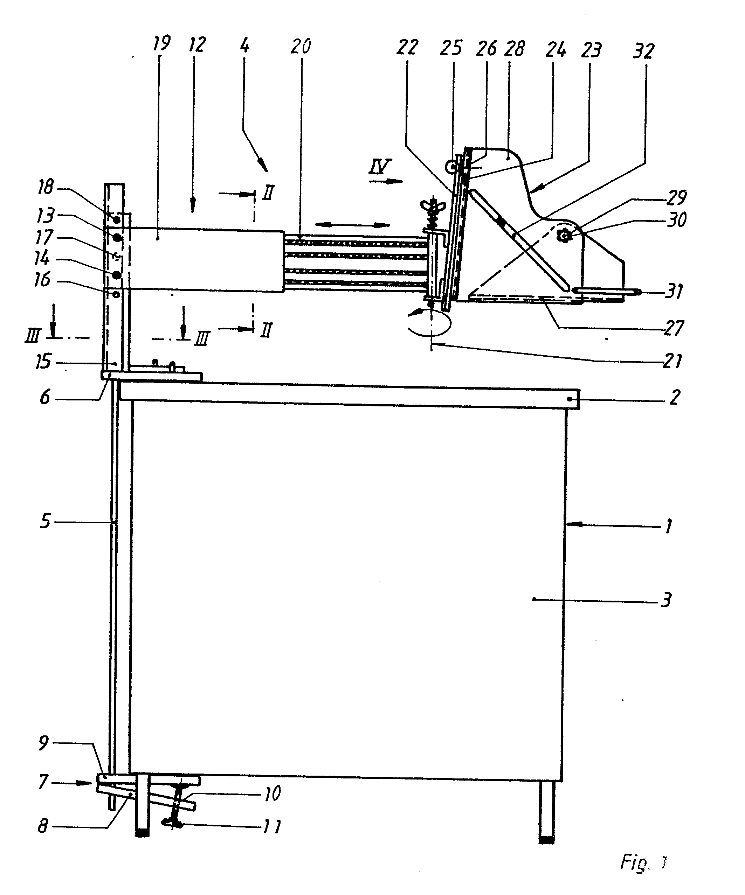

Fig. 2    eine Schnitt durch den Schwenkarm entlang
          der Linie II - II in Figur 1 im gegenüber
          Figur 1 vergrößerten Maßstab,

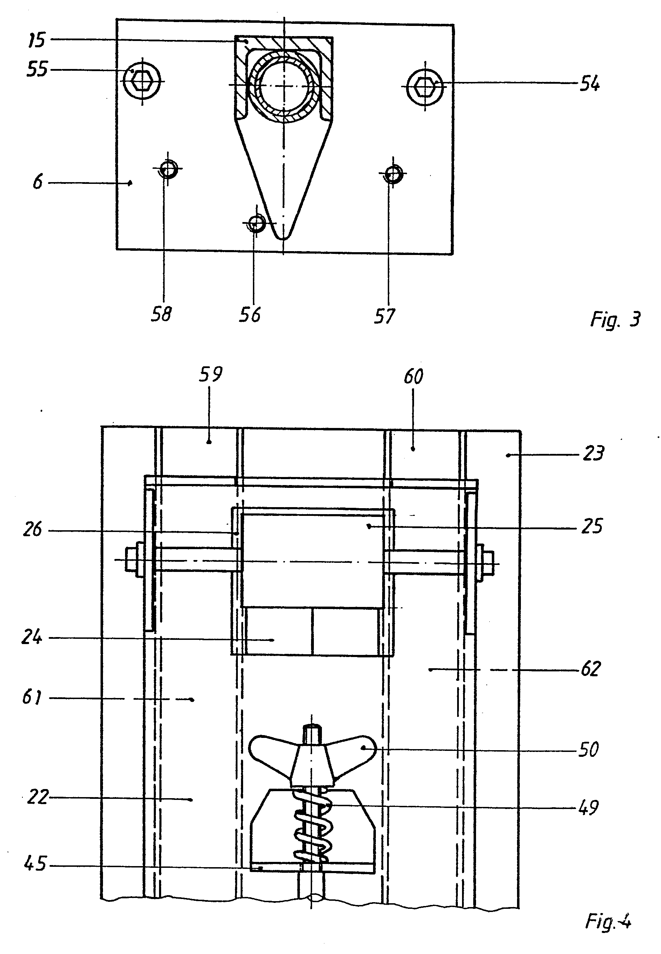

Fig. 3    einen horizontalen Schnitt durch die senkrechte Säule des Schwenkarms, entlang der
          Linie III - III in Figur 1 im gegenüber
          Figur 1 vergrößerten Maßstab,

Fig. 4    einen Blick auf die Rückseite der Konsole
          des Schwenkarmes in Richtung des in Figur 1
          eingetragenen Pfeiles IV.

Die Figur 1 zeigt von der Seite einen Schreibtisch 1 mit
einer Schreibtischplatte 2, einem darunter befindlichen
Korpus 3. An der Rückseite dieses Schreibtisches 1 ist
ein allgemein mit 4 bezeichneter Schwenkarm befestigt.
Dieser Schwenkarm 4 weist eine senkrechte Säule 5 auf,
die fest in einer auf der Schreibtischplatte 2 aufliegenden Auflageplatte 6 gehalten ist. Die Auflageplatte 6
kann entweder mit der Säule 5 verschweißt oder durch
einen lösbaren, durch die Säule 5 führenden Stift unverschiebbar gehalten sein. Ein auf der Säule 5 verschieblicher Klemmarm 7 besteht aus zwei auf die Säule 5 aufgeschobenen Klemmplatten 8, 9. Die untere Klemmplatte 8
hat eine Gewindebohrung 10, durch die eine Klemmschraube
11 geführt ist, die gegen die andere Klemmplatte 9 zu
drücken vermag. Zur Befestigung der Säule 5 setzt man
diese mit der Auflageplatte 5 auf die Schreibtischplatte
2 und schiebt dann die Klemmplatten 8, 9 von unten her
gegen den Korpus 3. Anschließend ist die Klemmschraube
11 anzuziehen, wodurch die Klemmplatten 8, 9 gespreizt
werden und die obere Klemmplatte 9 sich fest gegen den

...

Korpus 3 preßt.

Oberhalb der Schreibtischplatte 2 ist an der Säule 5 schwenkbar ein Ausleger 12 befestigt. Dieser Ausleger 12 ist mittels zweier Schrauben 13, 14 an einem von oben auf die Säule 5 geschobenen und auf der Auflageplatte 6 aufsitzenden Tragteil 15 befestigt. Das Tragteil 15 hat zusätzlich zu den nicht positionierten Gewindebohrungen für die Schrauben 12, 14 insgesamt drei weitere Gewindebohrungen 16, 17, 18, so daß es möglich ist, den Ausleger 12 eine Position höher oder tiefer am Tragteil 15 zu befestigen.

Der Ausleger 12 besteht im wesentlichen aus einem Rechteckhohlprofil 19, mit dem er am Tragteil 15 befestigt ist und einer Tragplatte 20, die teleskopartig aus dem Rechteckhohlprofil 19 herausfahrbar ausgebildet ist. Am freien Ende der Tragplatte 20 ist eine senkrechte Achse 21 gehalten, welche schwenkbar eine Platte 22 trägt, an der in etwa senkrecht verschiebbar eine als Korb ausgebildete Konsole 23 befestigt ist. Zum Gewichtsausgleich der Konsole 23 und eines von ihr gehaltenen Gerätes dient eine Zugausgleichsfeder 24, deren Aufwickelrolle 25 in der Platte 22 gelagert ist und die durch eine Öffnung 26 der Platte 22 hindurch geführt und an der Konsole 23 befestigt ist.

Die Konsole 23 hat einen Boden 27, der pendelnd in einer in den Seitenteilen 28 der Konsole 23 gehaltenen Achse 29 gehalten und in jeder Stellung mittels eines Knopfes 30 bzw. zwei Knöpfen an jeder Seite der Konsole 23 arretierbar ist. Sowohl an der Vorderseite der Konsole 23 als auch an beiden Seitenteilen 28 befindet sich jeweils eine Griffleiste 31, 32, mit denen es möglich ist, die Konsole 23 bequem in eine gewünschte Stellung zu schieben.

...

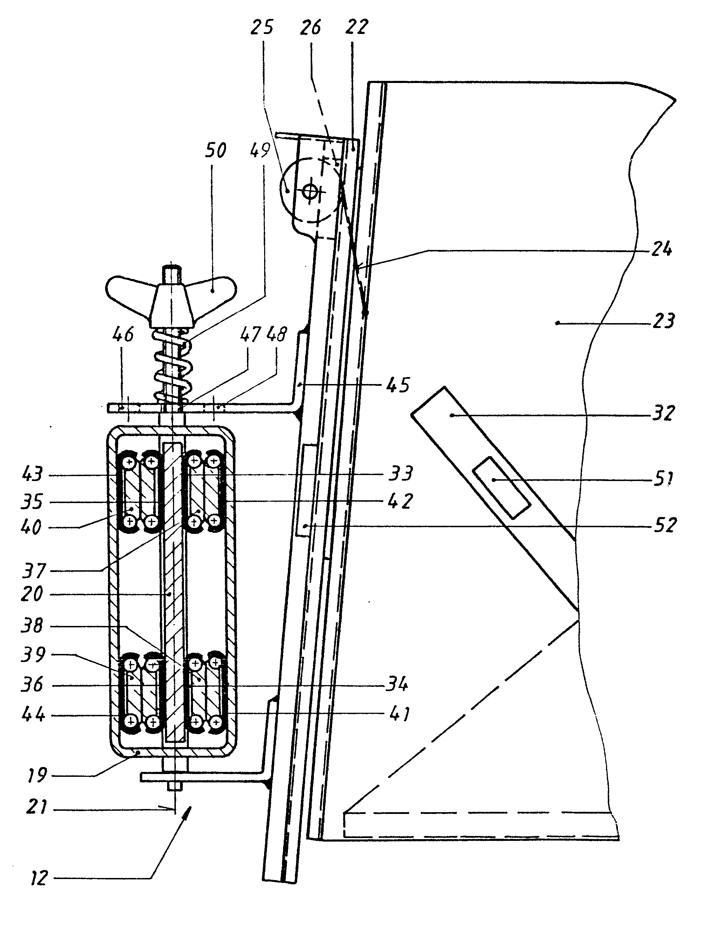

Die Figur 2 läßt zunächst die Gestaltung des Auslegers 12 genauer erkennen. Zu erkennen ist, wie die Tragplatte 22 in dem Rechteckhohlprofil 19 geführt ist. Zu diesem Zweck sind auf beiden Seiten der Tragplatte 19 auf ihr zwei Oberschienen 33, 34, 35, 36 angebracht, die jeweils über eine Auszugsschiene 37, 38, 39, 40 greifen. Weiterhin werden diese Auszugsschienen 37, 38, 39, 40 von an den seitlichen Innenflächen des Rechteckhohlprofils 19 befestigten Oberschienen 41, 42, 43, 44 umgriffen. Zieht man an der Konsole 23, so bewegt sich die Tragplatte 22 aus dem Rechteckhohlprofil 19 heraus, wobei zwecks Erreichen der maximalen Auskragung auch die Auszugsschienen 37 - 40 teilweise aus dem Rechteckhohlprofil 19 herauswandern.

Die Figur 2 läßt weiterhin erkennen, daß die Platte 22 mittels eines Haltebleches 45 von oben her auf die Achse 21 am Ende der Tragplatte 20 des Auslegers 12 geschoben ist. Dieses Halteblech 45 hat hintereinander beispielsweise drei Löcher 46, 47, 48, die es ermöglichen, die Platte 22 unterschiedlich stark nach vorn gekippt auf der Achse 21 zu befestigen. Auf der Achse 21 sitzt oberhalb des Haltebleches 45 eine Schraubenfeder 49, die mittels einer auf die Achse geschraubten Mutter 50 unterschiedlich gespannt werden kann und dadurch das Halteblech 45 unterschiedlich stark nach unten drückt, was zur Folge hat, daß die Platte 22 je nach Stellung der Mutter 50 mehr oder minder leicht um die Achse 21 zu schwenken ist.

Figur 2 zeigt weiterhin, daß auf der Griffleiste 32 ein Bremslösehebel 51 angeordnet ist. Durch Verschieben dieses Bremslösehebels 51 hebt eine an der Konsole 23 befestigte Bremsbacke 52 von der Seitenfläche der Platte 22 ab, so daß anschließend die Konsole 23 höhenverstellt werden kann. Ein entsprechender Bremslösehebel kann auch auf der Griffleiste 31 beispielsweise zum Lösen einer

...

den Ausfahrhub der Tragplatte 20 hemmenden Bremse vorgesehen sein.

Die Figur 3 zeigt einen Blick auf die Auflageplatte 6. Zu erkennen ist, daß das Tragteil 15 im Querschnitt U-förmig ist und einen nach vorn gerichteten Zeiger 53 hat. Dieser Zeiger 53 schwenkt über die Auflageplatte 6, wenn der Ausleger 12 und damit auch das Tragteil 15 eine Schwenkbewegung ausführen. Der Schwenkweg des Zeigers 53 kann durch Schrauben 54, 55 begrenzt werden, die von oben her in die Auflageplatte 6 geschraubt sind. Um die Endstellungen des Auslegers 12 unterschiedlich begrenzen zu können, sind in der Tragplatte 6 an verschiedenen Stellen Gewindebohrungen 56, 57, 58 vorgesehen, in die die Schrauben 54, 55 einschraubbar sind.

Die Figur 4 läßt erkennen, daß die Konsole 23 auf der Platte 22 genau wie die Tragplatte 20 im Rechteckhohlprofil 19 auf über gestrichelt dargestellten Führungsschienen 61, 62 der Platte 22 mit Oberschienen 59, 60 geführt ist, damit die Höhenverstellung leichtgängig erfolgen kann. Weiterhin sind in Figur 4 die Aufwickelrolle 25 und die Öffnung 26 in der Platte 22 zu erkennen, durch die die Zugausgleichsfeder 24 hindurch zur Konsole 23 geführt ist. Deutlicher zu erkennen als in Figur 2 sind auch das Halteblech 45, die Schraubenfeder 49 und die Mutter 50, mit der die Schwergängigkeit der Schwenkbewegung um die Achse 21 eingestellt werden kann.

## Auflistung der verwendeten Positionszahlen

| | | | |
|---|---|---|---|
| 1 | Schreibtisch | 36 | Oberschiene |
| 2 | Schreibtischplatte | 37 | Auszugsschiene |
| 3 | Korpus | 38 | Auszugsschiene |
| 4 | Schwenkarm | 39 | Auszugsschiene |
| 5 | Säule | 40 | Auszugsschiene |
| 6 | Auflageplatte | 41 | Oberschiene |
| 7 | Klemmarm | 42 | Oberschiene |
| 8 | Klemmplatte | 43 | Oberschiene |
| 9 | Klemmplatte | 44 | Oberschiene |
| 10 | Gewindebohrung | 45 | Halteblech |
| 11 | Spannschraube | 46 | Loch |
| 12 | Ausleger | 47 | Loch |
| 13 | Schraube | 48 | Loch |
| 14 | Schraube | 49 | Schraubenfeder |
| 15 | Tragteil | 50 | Mutter |
| 16 | Gewindebohrung | 51 | Bremslösehebel |
| 17 | Gewindebohrung | 52 | Bremsbacke |
| 18 | Gewindebohrung | 53 | Zeiger |
| 19 | Rechteckhohlprofil | 54 | Schraube |
| 20 | Tragplatte | 55 | Schraube |
| 21 | Achse | 56 | Gewindebohrung |
| 22 | Platte | 57 | Gewindebohrung |
| 23 | Konsole | 58 | Gewindebohrung |
| 24 | Zugausgleichsbandfeder | 59 | Oberschiene |
| 25 | Aufwickelrolle | 60 | Oberschiene |

...

**0172320**

- 12 -

| 26 | Öffnung | 61 | Führungsschiene |
|---|---|---|---|
| 27 | Boden | 62 | Führungsschiene |
| 28 | Seitenteil | | |
| 29 | Achse | | |
| 30 | Knopf | | |
| | | | |
| 31 | Griffleiste | | |
| 32 | Griffleiste | | |
| 33 | Oberschene | | |
| 34 | Oberschiene | | |
| 35 | Oberschiene | | |

Ansprüche

1. Schwenkarm zur Halterung eines am Schreibtisch zu benutzenden Gerätes, insbesondere eines Mikrofilm-Lesegerätes, welcher einen an einer senkrecht am Schreibtisch zu befestigenden Säule schwenkbar gehaltenen, teleskopartigen Ausleger hat, an dessen Ende eine Konsole zur Aufnahme des Gerätes vorgesehen ist, dadurch gekennzeichnet, daß die Konsole (23) zumindest in etwa senkrecht zum Ausleger (12) verschiebbar am Ende des Auslegers (12) befestigt ist.

2. Schwenkarm nach Anpruch 1, dadurch gekennzeichnet, daß die Konsole (22) bis auf die Schreibtischplatte (2) hinab senkrecht verschiebbar ist.

3. Schwenkarm nach Anspruch 1 oder einem der folgenden, dadurch gekennzeichnet, daß am Ende des Auslegers (12) eine zumindest in etwa senkrechte Platte (22) mit zwei Führungsschienen (61, 62) angeordnet ist, über die ein zumindest in etwa senkrechter Bereich der Konsole (23) mit zwei Oberschienen (59, 60) greift.

4. Schwenkarm nach Anspruch 1 oder einem der folgenden, dadurch gekennzeichnet, daß in der Platte (22) eine Zugausgleichsbandfeder (24) mit ihrer Aufwickelrolle (25) gelagert ist und daß das freie Ende der Zugausgleichsbandfeder (24) durch die Platte (22) hindurch geführt und mit der Konsole (23) verbunden ist.

...

5. Schwenkarm nach Anspruch 1 oder einem der folgenden, dadurch gekennzeichnet, daß die Konsole (23) als ein das zu haltende Gerät an drei Seiten zumindest teilweise umschließender Korb ausgebildet ist.

6. Schwenkarm nach Anspruch 1 oder einem der folgenden, dadurch gekennzeichnet, daß die Konsole (23) einen um eine in Seitenteilen (28) des Korbs gelagerte Achse (29) schwenkbaren und in beliebigen Stellungen feststellbaren Boden (27) hat.

7. Schwenkarm nach Anspruch 1 oder einem der folgenden, dadurch gekennzeichnet, daß die Achse (29) des Bodens (27) vor der senkrechten Schwerpunktlinie des mit dem zu haltenden Gerätes belasteten Bodens (27) liegt und an der Rückseite des Bodens (27) eine Zugausgleichsbandfeder (24) vorgesehen ist.

8. Schwenkarm nach Anspruch 1 oder einem der folgenden, dadurch gekennzeichnet, daß die senkrechte Säule (5) eine fest mit ihr verbundene oder verbindbare, von oben her auf eine Schreibtischplatte (2) aufsetzbare Auflageplatte (6) und einen auf der Säule (5) verschiebbaren Klemmarm (7) hat und daß die Säule (5) im montierten Zustand bis unter den Schreibtischkorpus (5) reicht.

9. Schwenkarm nach Anspruch 1 oder einem der folgenden, dadurch gekennzeichnet, daß der Klemmarm (7) aus zwei verschieblichen Klemmplatten (8, 9) besteht, wobei eine Klemmplatte (8) nahe ihres der Säule (5) abgewandten Endes in einer durchgehenden Gewindebohrung (10) eine gegen die andere Klemmplatte (9) andrückbare Spannschraube (11) hat.

10. Schwenkarm nach Anspruch 1 oder einem der folgenden, dadurch gekennzeichnet, daß der Ausleger (12) im Querschnitt die Form eines mit seiner Schmalseite nach unten weisenden Rechtecks hat.

11. Schwenkarm nach Anspruch 1 oder einem der folgenden, dadurch gekennzeichnet, daß der Ausleger (12) aus einem Rechteckhohlprofil (19) und einer aus ihr herausziehbaren Tragplatte (20) rechteckigen Querschnitts besteht.

12. Schwenkarm nach Anspruch 1 oder einem der folgenden, dadurch gekennzeichnet, daß beiderseits der Tragplatte (20) jeweils zwei Oberschienen (33 - 36) befestigt sind, die über jeweils eine Auszugschiene (37 - 40) greifen, welche ihrerseits in Oberschienen (41 - 44) an den Innenflächen des Rechteckhohlprofils (19) befestigt sind.

13. Schwenkarm nach Anspruch 1 oder einem der folgenden, dadurch gekennzeichnet, daß die Konsole (23) mittels eines mehrere Löcher (46, 47, 48) hintereinander aufweisenden Haltebleches (45) von oben her in die Achse (21) am Ende der Tragplatte (20) in eine leicht nach vorn gekippte Stellung derart eingehangen ist, daß die Achse (21) durch ein beliebiges der Löcher (46, 47, 48) im Halteblech (45) ragt.

14. Schwenkarm nach Anspruch 1 oder einem der folgenden, dadurch gekennzeichnet, daß auf der Achse (21) oberhalb des Haltebleches (45) eine Schraubenfeder (49) sitzt, deren Spannkraft durch eine auf die Achse (21) aufgeschraubte Mutter (50) verstellbar ist.

15. Schwenkarm nach Anspruch 1 oder einem der folgenden, dadurch gekennzeichnet, daß an der Vorderseite der Konsole (23) und an beiden Seitenteilen jeweils eine Griffleiste (31, 32) vorgesehen ist.

...

0172320

- 16 -

15. Schwenkarm nach Anspruch 1 oder einem der folgenden, dadurch gekennzeichnet, daß an der Vorderseite der Konsole (23) und an beiden Seitenteilen jeweils eine Griffleiste (31, 32) vorgesehen ist.

16. Schwenkarm nach Anspruch 1 oder einem der folgenden, dadurch gekennzeichnet, daß auf den Griffleisten (31, 32) ein Bremslösehebel (51) zur Freigabe der Beweglichkeit des Schwenkarms (4) vorgesehen ist.

17. Schwenkarm nach Anspruch 1 oder einem der folgenden, dadurch gekennzeichnet, daß durch die senkrechte Säule (5) und den Ausleger (12) ein elektrisches Kabel bis zur Konsole (23) geführt ist.

Fig. 1

0172320

1/3

0172320

2/3

Fig. 2

15
55
54
6
58    56    57

Fig. 3

59    60
23
26    25
24
62
61
22
50
49
45

Fig. 4

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | BE-A- 478 456 (JUCHER) | | F 16 M 13/02 |
| | --- | | |
| A | FR-A- 829 724 (PETIT) | | |
| | --- | | |
| A | US-A-4 030 691 (FLESHMAN) | | |
| | ----- | | |
| | ♪ | | |

| | RECHERCHIERTE SACHGEBIETE (Int Cl 4) |
|---|---|
| | F 16 M |
| | G 03 B |
| | A 47 B |
| | H 04 M |
| | F 21 V |

Der vorliegende Recherchenbericht wurde für alle Patentansprüche erstellt.

| Recherchenort DEN HAAG | Abschlußdatum der Recherche 19-11-1985 | Prüfer BARON C. |
|---|---|---|